# EUROPÄISCHE PATENTSCHRIFT

(11) **EP 2 475 920 B1**
(45) Veröffentlichungstag und Bekanntmachung des Hinweises auf die Patenterteilung: **17.09.2014**
(21) Anmeldenummer: 10728159.4
(22) Anmeldetag: 18.06.2010
(51) Int. Cl.: F16K 37/00

(54) **DIAGNOSESYSTEM FÜR EIN VENTIL**
DIAGNOSTIC SYSTEM FOR A VALVE
SYSTÈME DE DIAGNOSTIC POUR UNE SOUPAPE

(30) Priorität: 07.09.2009 DE 102009040397
(43) Veröffentlichungstag der Anmeldung: 18.07.2012
(73) Patentinhaber: Siemens Aktiengesellschaft, 80333 München (DE)
(72) Erfinder: PÜTTMER, Alf, 76137 Karlsruhe (DE)
(86) Internationale Anmeldenummer: PCT/EP2010/058606
(87) Internationale Veröffentlichungsnummer: WO 2011/026666

(56) Entgegenhaltungen:
- US-A- 5 616 829
- US-A1- 2004 149 831
- US-A1- 2007 068 225

## Beschreibung

Die Erfindung betrifft einen Stellungsregler mit einem Diagnosesystem für ein von einem Stellungsregler über einen Antrieb betätigbares Ventil nach dem Oberbegriff des Anspruchs 1.

In vielen Bereichen der Prozess- und Energietechnik hängt der störungsfreie Betrieb einer Anlage von der einwandfreien Funktion der eingesetzten Steuer- und Sperrventile ab. Zur Vermeidung kostenintensiver, irregulärer Betriebsunterbrechungen sollten Ventilschäden möglichst bereits im Anfangsstadium erkannt werden, das heißt bevor ein Ausfall eines Ventils einen Stillstand der Anlage verursachen kann. Beispielsweise führen defekte Ventilsitze zu Leckströmungen, die eine breitbandige Schallemission erzeugen. Eine Aufnahme und Auswertung der Schallemission eines Ventils kann somit zur Früherkennung von Ventilschäden dienen. Da Ventilschäden zu Fehler und teuren Folgekosten führen können, ist eine Diagnose evtl. mit automatischer Erfassung und programmierbarer Bewertung der Fehler von großem Nutzen. Statistische Auswertungen der Diagnosedaten können sowohl zur Optimierung der Wartungsprozesse für einen rechtzeitigen Ersatz eines schadhaften Ventils als auch zur qualitativen Beurteilung und Klassifizierung der Ventilhersteller oder zur Beurteilung der Eignung bestimmter Ventile für verschiedene Prozessarten dienen.

Aus der DE 199 24 377 A1 ist ein Diagnosesystem für ein von einem Stellungsregler über einen Antrieb betätigbares Ventil bekannt, das eine Einrichtung zur Erfassung, Speicherung und Auswertung von an dem Ventil gemessenen Körperschallspektren aufweist. Um eine besonders zuverlässige Ventildiagnose zu ermöglichen, ist in der Einrichtung zur Erfassung, Speicherung und Auswertung ein bei geringfügig geöffnetem, intaktem Ventil erfasstes Körperschallspektrum abspeicherbar. Zur Diagnose wird ein bei geschlossenem Ventil erfasstes Körperschallspektrum mit dem abgespeicherten verglichen und die Ähnlichkeit als ein Kriterium für die Undichtigkeit des Ventils herangezogen. Das bekannte Diagnosesystem hat jedoch den Nachteil, dass die Erfassung, Speicherung und Auswertung von Körperschallspektren zur Feststellung einer Leckageströmung vergleichsweise aufwendig ist. Insbesondere bei ESD (Emergency-Shut-Down)-Ventilen wird jedoch ein einfaches Diagnosesystem gewünscht, mit welchem der Betreiber einer Anlage feststellen kann, ob diese Ventile eine Leckage aufweisen.

Aus der US 2007/068225 A1 ist ein Diagnosesystem für ein Prozessventil bekannt, bei welchem zur Diagnose einer Leckage Drucksignale von zwei Sensoren ausgewertet werden, die im Auslaufbereich des Ventilkörpers an verschiedenen Stellen angeordnet sind. In einer angegebenen Alternative können die beiden Drucksensoren durch zwei Temperatursensoren ersetzt werden.

Der Erfindung liegt daher die Aufgabe zugrunde, einen Stellungsregler mit einem Diagnosesystem für ein von einem Stellungsregler über einen Antrieb betätigbares Ventil zu schaffen, das mit besonders geringem Aufwand eine zuverlässige Diagnose einer Leckageströmung ermöglicht.

Zur Lösung dieser Aufgabe weist das neue Diagnosesystem der eingangs genannten Art die im kennzeichnenden Teil des Anspruchs 1 angegebenen Merkmale auf. In den Unteransprüchen sind vorteilhafte Weiterbildungen beschrieben.

Die Erfindung beruht auf der Erkenntnis, dass eine Expansion eines Gases an einer Leckagestelle eines Ventils eine Temperaturabsenkung verursacht. Diese Temperaturabsenkung gegenüber der Umgebung wird nun mit einem ersten Temperatursensor, dessen Messwert stärker vom Ventil abhängig ist, und mit einem zweiten Temperatursensor, der eine bessere Wärmekopplung zur Umgebung hin aufweist, erfasst und zur Diagnose einer Leckage ausgewertet. Wenn im Ventil keine Leckage auftritt, messen beide Temperatursensoren etwa die gleiche Temperatur, nämlich etwa Umgebungstemperatur. Tritt im Ventil jedoch eine Gasleckage auf, so wird die Temperatur des Ventils abnehmen und die Temperatur am ersten Temperatursensor sinkt deutlich gegenüber der am zweiten Temperatursensor gemessenen Temperatur ab. Mit Hilfe zweier einfacher Temperatursensoren, die am Markt vergleichsweise günstig erhältlich sind, kann somit in besonders einfacher Weise eine Ventildiagnose auf das Vorliegen einer unzulässigen Leckage durchgeführt werden. Gegenüber der herkömmlichen Ventildiagnose mit Hilfe von Körperschallsignalen hat die Erfindung den Vorteil, dass auf einen Körperschallsensor und eine Auswertung von Körperschallspektren, die vergleichweise aufwendig sind, verzichtet werden kann. Da sich beide Temperatursensoren am oder im Gehäuse des Stellungsreglers befinden, ist zudem keine aufwendige Montage der Temperatursensoren und keinerlei Verkabelung zum Anschluss der Temperatursensoren an eine Auswerteeinrichtung erforderlich. Somit wird ein Diagnosesystem erhalten, das sich durch einen besonders geringen Realisierungsaufwand auszeichnet.

Gemäß einer besonders vorteilhaften Ausgestaltung ist die Auswerteeinrichtung, welche die beiden Temperaturmesswerte zur Gewinnung einer Diagnoseaussage verarbeitet, in den Stellungsregler integriert. Zur Durchführung der Regelungsaufgaben sind Stellungsregler nämlich üblicherweise mit einem Mikrocontroller versehen, der in geeigneter Weise programmiert ist. In den Programmspeicher des Mikrocontrollers muss somit lediglich eine zusätzliche Programmroutine zur Implementierung der Auswerteeinrichtung geladen werden. Ein derartiges Diagnosesystem ist gegenüber einem herkömmlichen Stellungsregler mit einem geringen Zusatzaufwand verbunden, da lediglich Software ergänzt werden muss, die auf der bereits vorhandenen Hardware ablaufen kann.

In vorteilhafter Weise kann eine besonders zuverlässige Diagnoseaussage erhalten werden, wenn die maximale Abweichung zwischen den beiden Temperaturmesswerten, bei deren Überschreiten eine Leckage festgestellt wird, anhand einer bei intaktem, während des Betriebs geringfügig geöffnetem Ventil erfassten Temperaturabweichung ermittelt und abgespeichert wird. Dazu kann ein intaktes Ventil um einen kleinen Spalt, beispielsweise 2% seines Stellbereichs, geöffnet werden. Die Referenzmessung wird vorzugsweise mit demselben Medium durchgeführt, welches auch dann das Ventil durchströmt, wenn es in die prozesstechnische Anlage eingebaut ist. Damit der Referenzwert im jeweiligen Anwendungsfall besonders aussagekräftig ist, kann dieser vorteilhaft bei der Inbetriebnahme des Ventils in der prozesstechnischen Anlage erfasst und für den späteren Vergleich zur Leckagediagnose des geschlossenen Ventils abgespeichert werden. Er ist dann vom jeweiligen Prozessumfeld abhängig und exemplarspezifisch.

In vorteilhafter Weise wird eine besonders einfache Montage erreicht, wenn der Stellungsregler, die Temperatursensoren und die Auswerteeinrichtung in einem gemeinsamen Gehäuse angeordnet sind. Für einen Einsatz in explosionsgefährdeten Bereichen hat dies zudem den Vorteil, dass lediglich ein Gehäuse als druckdichte Kapselung ausgeführt werden muss.

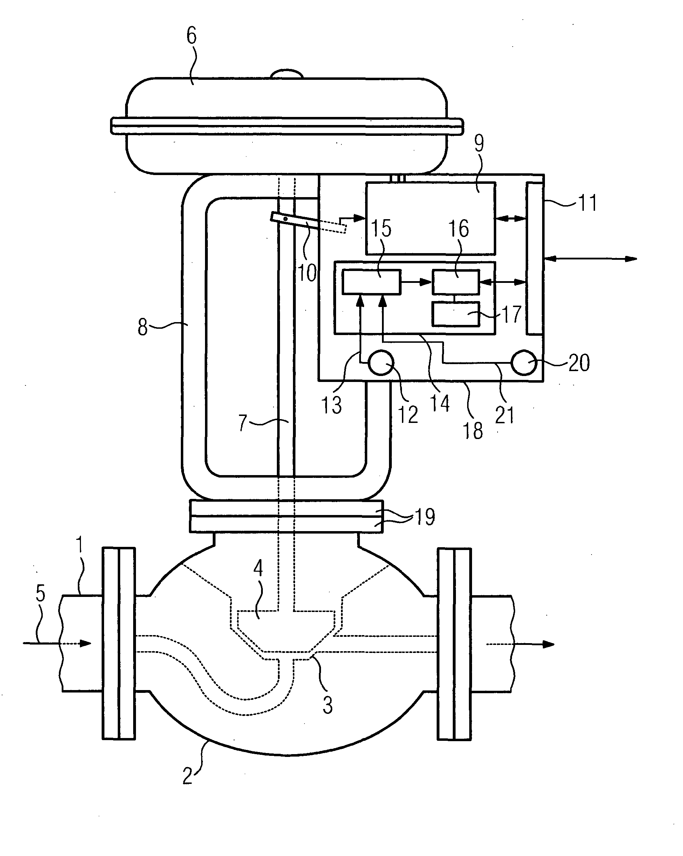

Anhand der Zeichnung, in der ein Ausführungsbeispiel der Erfindung dargestellt ist, werden im Folgenden die Erfindung sowie Ausgestaltungen und Vorteile näher erläutert.

Die einzige Figur zeigt den prinzipiellen Aufbau eines Regelventils mit einem Diagnosesystem.

In einer Rohrleitung 1 einer nicht weiter dargestellten prozesstechnischen Anlage ist gemäß der Figur ein Ventil 2 eingebaut, das durch einen entsprechenden Hub eines mit einem Ventilsitz 3 zusammenwirkenden Schließkörpers 4 den Durchfluss eines Mediums 5 steuert. Der Hub wird durch einen pneumatischen Antrieb 6 erzeugt und mittels einer Ventilstange 7 auf den Schließkörper 4 übertragen. Der Antrieb 6 ist über ein Joch 8 und Flansche 19 mit dem Gehäuse des Ventils 2 verbunden. An dem Joch 8 ist ein Stellungsregler 9 angebracht, der eingangsseitig über ein an der Ventilstange 7 angreifendes Verbindungsstück 10 den Hub erfasst, diesen mit einem über eine Datenschnittstelle 11 von einem Feldbus zugeführten Sollwert vergleicht und ausgangsseitig den pneumatischen Antrieb 6 im Sinne einer Ausregelung der Regeldifferenz steuert. Ein erster Temperatursensor 12 zur Erzeugung eines ersten Temperatursignals 13 ist an einer Befestigungsschraube eines Gehäuses 18 des Stellungsreglers 9 angebracht. Ein zweiter Temperatursensor 20, der ein zweites Temperatursignal 21 liefert, befindet sich in weiterer Entfernung zum Joch 8 und hat damit eine deutlich schlechtere Wärmekopplung zum Ventil 2. Die beiden Temperatursignale 13 und 21 werden einer Auswerteeinrichtung 14 zugeführt. Diese enthält eine Signalaufbereitungsschaltung 15, in der die Temperatursignale 13 und 21 gefiltert und digitalisiert werden. In einer nachgeordneten Recheneinheit 16 wird die Differenz zwischen einem so anhand des ersten Temperatursignals 13 gewonnenen ersten Temperaturwert und einem zweiten Temperaturwert, der aus dem zweiten Temperatursignal 21 erhalten wurde, berechnet und mit einem Referenzwert verglichen, der in einem Speicher 17 hinterlegt ist. Wenn der erste Temperaturwert um mehr als die als Referenzwert vorgegebene maximale Abweichung niedriger ist als der zweite Temperaturwert, wird mit Hilfe der Auswerteeinrichtung 14 eine Leckage des Ventils festgestellt und eine entsprechende Meldung über die Datenschnittstelle 11 als Signal zur Anzeige einer Ventilleckage ausgegeben. Die Diagnose des Ventils wird periodisch ausgeführt oder über die Datenschnittstelle 11 veranlasst, über die auch das Ergebnis der Diagnose abfragbar ist. Stellungsregler 9, erster Temperatursensor 12, zweiter Temperatursensor 20 und Auswerteeinrichtung 14 sind in dem gemeinsamen Gehäuse 18, das mit einer druckdichten Kapselung für den Einsatz in explosionsgefährdeten Bereichen ausgestattet ist, angeordnet. Dadurch werden extern geführte Verbindungskabel zwischen den elektronischen Komponenten des Regelventils vermieden.

Der im Speicher 17 hinterlegte Referenzwert wird bei der Inbetriebnahme des Regelventils 2 in der prozesstechnischen Anlage, in welchem es beispielsweise die Funktion eines ESD-Ventils hat, ermittelt. Zu diesem Zeitpunkt ist das Ventil intakt und weist noch keine Leckage im geschlossenen Zustand auf. Zur Simulation einer Leckage wird das Ventil um einen kleinen Spalt, der ca. 2% seiner maximalen Öffnung beträgt, geöffnet. Aufgrund der Expansion eines durch das Ventil 2 strömenden Gases stellt sich am ersten Temperatursensor 12 eine niedrigere Temperatur ein als am zweiten Temperatursensor 20 ein. Die so ermittelte Temperaturdifferenz wird als Referenzwert abgespeichert und für die spätere Ventildiagnose im geschlossenen Zustand des Ventils herangezogen.

## Patentansprüche

1. Stellungsregler mit einem Diagnosesystem für ein von dem Stellungsregler (9) über einen Antrieb (6) betätigbares Ventil (2), wobei der Stellungsregler (9) ein Gehäuse (18) aufweist und mit diesem an dem Ventil (2) befestigt ist und wobei ein erster Temperatursensor (12), der eine gute Wärmekopplung zum Ventil (2) und eine schlechte Wärmekopplung zur Umgebung aufweist, ein zweiter Temperatursensor (20) und eine Auswerteeinrichtung (14) vorhanden sind, wobei die Auswerteeinrichtung (14) dazu ausgebildet ist, einen mit dem ersten Temperatursensor (12) erfassten ersten Temperaturwert mit einem mit dem zweiten Temperatursensor (20) erfassten zweiten Temperaturwert zu vergleichen und ein Signal zur Anzeige einer Ventilleckage auszugeben, wenn der erste Temperaturwert um mehr als eine vorgegebene maximale Abweichung niedriger als der zweite Temperaturwert ist, **dadurch gekennzeichnet, dass** der erste Temperatursensor (12) und der zweite Temperatursensor (20) am oder im Gehäuse (18) des Stellungsreglers (9) angeordnet sind, und dass die Wärmekopplung des zweiten Temperatursensors (20) zum Ventil (2) schlechter und/oder zur Umgebung besser als die des ersten Temperatursensors (12) ist.

2. Stellungsregler nach Anspruch 1, **dadurch gekennzeichnet, dass** die Auswerteeinrichtung (14) in das Gehäuse (18) des Stellungsreglers (9) integriert ist.

3. Stellungsregler nach Anspruch 1 oder 2, **dadurch gekennzeichnet, dass** die maximale Abweichung anhand einer bei intaktem, während des Betriebs geringfügig geöffnetem Ventil erfassten Temperaturabweichung ermittelt und abgespeichert ist.

## Claims

1. Position controller having a diagnostic system for a valve (2) that can be actuated by the position controller (9) via a drive (6), the position controller (9) having a housing (18) and being fastened thereby on the valve (2), and there being present a first temperature sensor (12), which has a good thermal coupling with the valve (2) and a poor thermal coupling with the environment, a second temperature sensor (20) and an evaluation device (14), the evaluation device (14) being designed for the purpose of comparing a first temperature value, acquired by the first temperature sensor (12), with a second temperature value, acquired by the second temperature sensor (20), and to output a signal in order to display a valve leak when the first temperature value is lower than the second temperature value by more than a prescribed maximum deviation, **characterized in that** the first temperature sensor (12) and the second temperature sensor (20) are arranged on or in the housing (18) of the position controller (9), and **in that** the thermal coupling of the second temperature sensor (20) with the valve (2) is poorer and/or with the environment is better than that of the first temperature sensor (12).

2. Position controller according to Claim 1, **characterized in that** the evaluation device (14) is integrated in the housing (18) of the position controller (9).

3. Position controller according to Claim 1 or 2, **characterized in that** the maximum deviation is determined with the aid of a temperature deviation acquired with an intact valve during the operation of a slightly opened valve, and stored.

## Revendications

1. Régleur de position comprenant un système de diagnostic pour une vanne (2) pouvant être actionnée par le régleur (9) de position par l'intermédiaire d'un entraînement (6), dans lequel le régleur (9) de position a un boîtier (18) et est fixé par celui-ci à la vanne (2) et dans lequel il y a un premier capteur (12) de température, qui a un bon couplage de chaleur avec la vanne (2) et un mauvais couplage de chaleur avec l'atmosphère ambiante, un deuxième capteur (20) de température et un dispositif (14) d'exploitation, dans lequel le dispositif (14) d'exploitation est constitué pour comparer une première valeur de température détectée par le premier capteur (12) de température à une deuxième valeur de température détectée par le deuxième capteur (20) de température et pour émettre un signal d'affichage d'une fuite de la vanne, si la première valeur de température est plus basse que la deuxième valeur de température de plus qu'un écart maximum donné par l'avance, **caractérisé en ce que** le premier capteur (12) de température et le deuxième capteur (20) de température sont montés sur ou dans le boîtier (18) du régleur (9) de position et **en ce que** le couplage de chaleur du deuxième capteur (20) de température avec la vanne (2) est plus mauvais et/ou avec l'atmosphère ambiante meilleur que celui du premier capteur (12) de température.

2. Régleur de position suivant la revendication 1, **caractérisé en ce que** le dispositif (14) d'exploitation est intégré dans le boîtier (18) du régleur (9) de position.

3. Régleur de position suivant la revendication 1 ou 2, **caractérisé en ce que** l'écart maximum est déterminé au moyen d'un écart de température détecté alors que la vanne intacte est ouverte légèrement pendant le fonctionnement et est mémorisé.
